# EUROPEAN PATENT APPLICATION

(11) **EP 4 465 615 A1**
(43) Date of publication of application: **20.11.2024**
(21) Application number: 23747400.2
(22) Date of filing: 27.01.2023
(51) Int. Cl.: H04L 67/148, H04L 67/146, H04L 67/52, H04L 67/289, H04L 67/62, H04L 67/63

(54) **COMMUNICATION METHOD AND DEVICE FOR EDGE COMPUTING SYSTEM**

(30) Priority: 28.01.2022 KR 20220013211
(71) Applicant: Samsung Electronics Co., Ltd, Suwon-si, Gyeonggi-do 16677 (KR)
(72) Inventor: KIM, Hyesung, Suwon-si Gyeonggi-do 16677 (KR); LEE, Cheolung, Suwon-si Gyeonggi-do 16677 (KR)
(74) Representative: HGF
(86) International application number: PCT/KR2023/001303
(87) International publication number: WO 2023/146359

(57) **Abstract**

The present disclosure relates to a 5G or 6G communication system for supporting higher data transmission rates. In a wireless communication system, a method performed by an edge enabler server (EES) comprises the steps of: receiving, from an edge enabler client (EEC), a request message including information related to a predicted movement path of a terminal including the EEC; and determining an application context storage time on the basis of information related to the predicted movement path of the terminal.

## Description

### [Technical Field]

The disclosure relates to a method and device for performing communication between a UE and a network server in an edge computing system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

An aspect of the disclosure is to provide a method and device for performing communication between a UE and a server in an edge computing system.

Another aspect of the disclosure is to provide a method and device for effectively managing application context information between a UE and a server.

Another aspect of the disclosure is to efficiently change an edge enabler server or an edge application server according to a movement of a UE.

### [Technical Solution]

According to the disclosure, an edge enabler server (EES) in a wireless communication system may comprise a transceiver and at least one processor connected to the transceiver. The at least one processor may be configured to: receive, from an edge enabler client (EEC) a request message including information related to a predicted movement path of a user equipment (UE) in which the EEC is included, and determine an application context storage time based on the information related to the predicted movement path of the UE.

Further, the request message may be an application context relocation (ACR) request message. The information related to the predicted movement path of the UE may include at least one of a service continuity planning indication, a target EES service area predicted arrival time, an application context holding timer request value (application context expiration timer), an identifier of the UE, an application identifier, information about an EES currently serving the UE, and an edge application server (EAS) currently serving the UE.

Further, the at least one processor may determine a first edge application server (EAS) based on the movement path of the UE, receive, from the first EAS, information related to a predetermined application context storable time and determine the application context storage time based on the information related to the application context storable time and the information related to the predicted movement path of the UE.

Further, the application context storage time may be determined to be a smaller value of the application context storable time and the information related to the predicted movement path of the UE.

Further, the at least one processor may be further configured to transmit the determined application context storage time to the EEC.

According to the disclosure, a method performed by an edge enabler server (EES) in a wireless communication system may comprise receiving a request message including information related to a predicted movement path of a user equipment (UE) including an edge enabler client (EEC) from the EEC and determining an application context storage time based on the information related to the predicted movement path of the UE.

### [Advantageous Effects]

According to the disclosure, it is possible to easily manage an application context between a UE and an edge network in an edge computing system, saving resources.

According to the disclosure, it is possible to predict a movement path of a UE in an edge computing system to previously store an application context in a predicted server, thereby enabling communication without delay even in a changed server.

### [Brief Description of Drawings]

FIG. 1 illustrates an example of a hierarchical structure between a UE and a communication network in an edge computing network;
FIG. 2 is a view illustrating a procedure for managing an application context based on an expected arrival time of a UE in an edge computing network, according to an embodiment of the disclosure;
FIG. 3 is a view illustrating a procedure for managing an application context based on an expected arrival time of a UE in an edge computing network, according to another embodiment of the disclosure;
FIG. 4 is a view illustrating a procedure for managing an application context based on an expected threshold time of an application server in an edge computing network, according to an embodiment of the disclosure;
FIG. 5 is a view illustrating a procedure for managing an application context based on prediction information of a communication network in an edge computing network, according to an embodiment of the disclosure;
FIG. 6 illustrates a procedure for managing an application context based on UE behavior information provided by a communication network in an edge computing network, according to an embodiment of the disclosure;
FIG. 7 illustrates a structure of a UE according to an embodiment of the disclosure;
FIG. 8 illustrates a structure of a server according to an embodiment of the disclosure; and
FIG. 9 illustrates a structure of a network device (or a communication network or a network) according to an embodiment of the disclosure.

### [Mode for Carrying out the Invention]

For edge computing service continuity, it is possible to preemptively transmit application context information by finding an edge application server that is expected to be accessed in the future according to the mobility-based prediction of the UE. According to the prediction-based context information relocation method, the UE may transmit the application context information to the peripheral edge application server in advance from the edge application server currently being serviced, and the peripheral edge application server may store the application context information. In this case, when the mobility prediction for the UE is wrong, there is a need for a device for deleting the application context stored in the peripheral edge application server and recovering related resources.

Hereinafter, the operational principle of the disclosure is described below with reference to the accompanying drawings. The terms described below are ones defined considering functions in the disclosure. Since the terms may be varied according to the user's or operator's intent or custom, their definitions should be determined according to the contents throughout the disclosure.

The terms referring to network entities and objects of an edge computing system as used herein, the terms referring to messages, and the term referring to identification information are provided as an example for ease of description. Thus, the disclosure is not limited by the terms, and such terms may be replaced with other terms denoting objects with equivalent technical concept.

Although terms and names as defined in the 5G system standard are used herein for ease of description, embodiments of the disclosure are not limited thereto or thereby, and the same may apply likewise to systems conforming to other standards.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

When determined to make the subject matter of the disclosure unnecessarily unclear, the detailed description of known functions or configurations may be skipped in describing embodiments of the disclosure. Hereinafter, the disclosure is described in detail with reference to the accompanying drawings.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

For ease of description, the terms and names defined in the latest 3rd generation partnership project (3GPP) LTE and NR standards among the current communication standards are used herein. However, the disclosure is not limited by such terms and names and may be likewise applicable to systems conforming to other standards. In particular, the disclosure may be applied to 3GPP NR (5th generation mobile communication standards). The embodiments of the disclosure may also apply to other communication systems with similar technical background or channel form. Further, embodiments of the present invention may be modified in such a range as not to significantly depart from the scope of the present invention under the determination by one of ordinary skill in the art and such modifications may be applicable to other communication systems.

The terms "first" and "second" may be used to describe various components, but the components should not be limited by the terms. The terms are used only to distinguish one component from another.

The terms as used herein are provided merely to describe some embodiments thereof, but not to limit the application scope or uses. As used herein, the singular forms "a," "an," and "the" are intended to include the plural forms as well, unless the context clearly indicates otherwise. It will be further understood that the terms "comprise" and/or "have," when used in this specification, specify the presence of stated features, integers, steps, operations, elements, and/or components, but do not preclude the presence or addition of one or more other features, integers, steps, operations, elements, components, and/or groups thereof.

The disclosure proposes a method for efficiently performing prediction-based edge application context relocation to support service persistence in an edge computing system. Specifically, the EES proposes various methods for determining a period for storing the application context transmitted from the target EAS in the prediction-based application context relocation operation. In the various methods proposed, methods for comprehensively using in a single procedure are also included in the scope of the disclosure. For example, the target EES and the target EAS may determine an application context holding time value considering all of (1) the predicted movement path of the UE provided by the EEC or the predicted arrival time of the target EES or target EAS service area or the application context holding timer request value, (2) the storage space information available to the target EAS (information obtainable from inside of the target EAS or from the EAS management system), (3) the application context holding time considering the application context holding limit value set by the target EAS, and (4) the expected UE behavior information obtained through the network function of the 5G core network.

Before detailing the present disclosure, some terms as used herein may be interpreted as follows, for example. However, it should be noted that the present disclosure is not limited thereto.

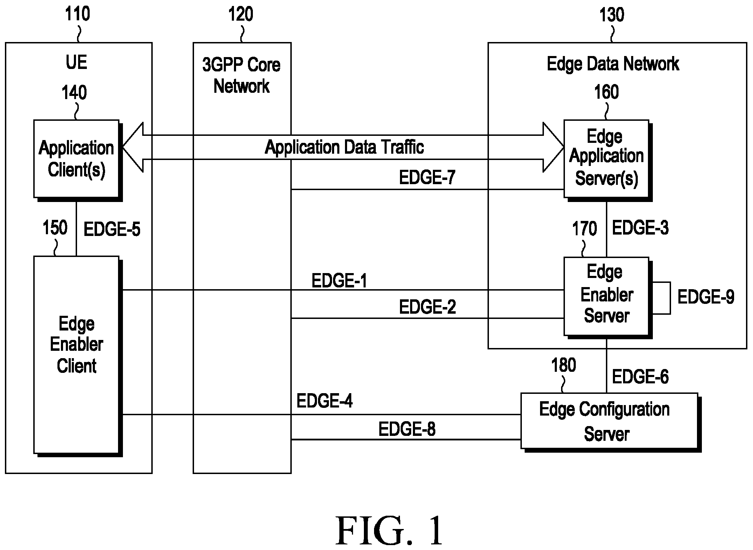

FIG. 1 illustrates an example of a hierarchical structure between a UE and a communication network in an edge computing network.

The edge computing system may include a user equipment (UE) 110, a communication network 120, an edge data network 130, and an edge configuration server 180. The UE 110 may include an application client 140 and an edge enabler client (EEC) 150. Edge data network 130 may be the concept encompassing all of edge enabler server (EES) 170 and edge application server (EAS) 160. Among them, the system related to edge computing may include an edge enabler server (EES) 170, an edge configuration server (ECS) 180, and an edge enabler client (EEC) 150. The edge enabler server 170 is establishing an edge hosting environment (or edge computing platform) and may know information about the edge application server (EAS) 160 running in the edge hosting environment.

The edge enabler server 170 communicates with the UE 110 to connect the application client 140 of the UE 110 to the edge application server 160 in the edge hosting environment. The UE 110 supporting the edge computing system may include the edge enabler client 150. The layer that interworks with the edge enabler client 150 and the edge enabler server 170 may be referred to as an edge enabling layer. In the disclosure, the UE 110 in which the edge enabler client 150 is embedded to configure the edge enabling layer may be an IoT device, a vehicle, or the like, as well as a smartphone.

The edge configuration server 180 knows deployment information about the edge enabler servers 170 and performs a function of transferring configuration information for using the edge computing service to the UE 110. The configuration information may include edge data network connection information (e.g., data network name, single network slice selection assistance information (S-NSSAI), etc.), edge data network service area (e.g., cell list, list of tracking area, public land mobile network (PLMN) ID), edge enabler server connection information (e.g., URI). The edge data network service area may be an edge enabler server available area set by the edge enabler server 170. Based on this, the UE 110 may receive information about the edge enabler server 170 accessible at a specific location. If the edge configuration server 180 may know information about the edge application server 160 running in the edge hosting environment of the specific edge enabler server 170, the UE 110 may also obtain the corresponding information through the edge enabler client 150. The layer where interworking between the edge enabler client 150 and the edge configuration server 180 is performed is also included in the edge enabling layer.

The edge application server 160 refers to a third party application server driven in the edge computing system. Since the edge application server 160 is driven within an infrastructure provided by the edge hosting environment, the edge application server 160 may provide an ultra-low latency service at a location close to the UE 110.

In the user equipment (UE) 110, there may be an application client 140, an edge enabler client 150 for interworking the application client with the edge computing service, and a mobile terminal (MT) (not shown) accessing the mobile communication system. The application of the UE is an application provided by a third party and refers to a client application program driven in the UE for a specific application service. A plurality of applications may be driven in the UE 110. At least one of these applications may use a mobile edge computing or multi-access edge computing (MEC) service. The edge enabler client 150 in the UE refers to a client that performs an operation in the UE necessary for using the edge computing service. The operations for determining which application may use the edge computing service, and connecting the network interface so that data of the UE application client 140 may be transferred to the edge application server 160 providing the edge computing service may be performed. The operation for establishing a data connection for using the edge computing service may be performed by the 3GPP communication layer through the mobile terminal. The 3GPP communication layer refers to a layer that performs a modem operation for using a mobile communication system, and may serve to establish a wireless connection for data communication, register the UE in the mobile communication system, establish a connection for data transmission in the mobile communication system, and transmit and receive data.

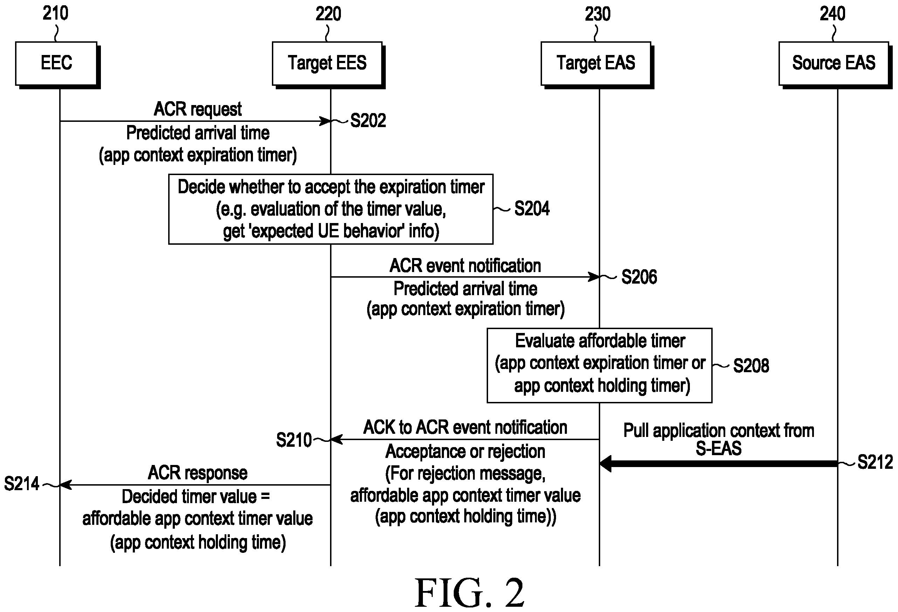

FIG. 2 is a view illustrating a procedure for managing an application context based on an expected arrival time of a UE in an edge computing network, according to an embodiment of the disclosure.

The EEC 210 may select the target EES and the target EAS using edge computing configuration information stored in the EEC 210 or edge computing configuration information obtained by requesting the edge configuration server (ECS) before performing step 1 of FIG. 2. Based on this, the following operations may be performed.

In step S202, the EEC (or UE) 210 may directly calculate or obtain the predicted movement path of the UE and the predicted arrival time of the target EES or target EAS service area. When selecting the target EES, the EEC 210 may select the target EES 220 in the predicted movement path of the UE. The EEC 210 may transmit an application context relocation (ACR) request message to the target EES 220 on the selected predicted movement path. The ACR request message may include at least one of ACR type information (an indicator indicating that the ACR request is prediction-based, e.g., a service continuity planning indication), target EES (or target EAS) service area predicted arrival time, an application context holding (expiration) timer request value, a UE identifier, an application identifier, source EES information (the address and identifier of the EES where the UE is currently connected or registered, the edge computing service provider identifier or source EES provider identifier as the source EES provider information), and the source EAS information (the identifier and the address of the edge application server currently serving the UE).

In step S204, when the ACR request message received from the EEC 210 includes at least one of the indicator indicating that the ACR request is prediction-based, UE expected movement path information, or target EES (or target EAS) service area predicted arrival time information, the target EES 220 may review and recalculate whether to accept the ACR request which is prediction-based, the expected movement path of the UE provided by the EEC 210, and the target EES (or target EAS) service area predicted arrival time information. Such review and recalculation may be performed through various methods, and FIG. 2 relates to a method of performing a review and determining the prediction time by the target EES 220 in association with the target EAS 230. Further, when the source EES provider identifier included in the information about the source EES provided by the EEC 210 is different from the provider identifier of the target EES 220, the target EES 220 may determine whether to perform the prediction-based application context relocation procedure according to the edge computing service provider policy or internal settings providing the target EES 220. For example, in the edge computing service provider policy or the internal settings, a policy forbidding the use of additional resources to pre-store the application context generated by the service provided by another provider may be set.

In step S206, the target EES 220 may provide the target EAS 230 with information received from the EEC 210 in step S202. The corresponding information may include at least one of ACR type information (an indicator indicating that the corresponding ACR request is prediction-based, e.g., the service continuity planning indication), the target EES (or target EAS) service area predicted arrival time, the application context holding timer request value, the UE identifier, the application identifier, and source EAS information (the identifier and address of the edge application server currently serving the UE). For example, information provided from the target EES 220 to the target EAS 230 may be included in an ACR event notification message and be transmitted.

In step S208, the target EAS 230 may determine whether it is possible to store and maintain the application context received from the source EAS 240 by the target EES (or target EAS) service area predicted arrival time received from the target EES 220 or the period specified in the application context holding timer request value ti. For example, the target EAS 230 may calculate the application context storage holdable time value t₂ determined according to the available storage space, compare the same with the application context holding time value ti received from the target EES 220, and determine the final application context holding time value (tₕ: final app context expiration timer or app context holding timer) (e.g., determine the final application context holding time value by determining according to tₕ = min(ti, t₂) for determining as the smaller value of the time values, or adding an offset (tₒ) time determined according to the edge computing service policy to the smaller of ti and t₂, like tₕ = min(ti, t₂) + tₒ). The target EAS 230 may obtain available storage space information from the EAS management system to determine the application context storage holdable time value t₂. Alternatively, when the EAS may directly obtain information about the available storage space, the EAS itself may calculate the application context storage holdable time value t₂. The target EAS 230 may store the calculated final application context holding time value tₕ and, immediately after receiving the application context from the source EAS 240, drive the timer in which the corresponding time value is set to store the application context only during the set timer value period, and may wait for the corresponding UE to access.

In step S210, the target EAS 230 may transmit an acknowledgment message to the target EES 220 in response to the message received from the target EES 220 through step S206. The final application context holding time value tₕ determined in step S208 may be included in the corresponding acknowledgment message. When the final application context holding time value tₕ determined in step S208 is less than the target EES (or target EAS) service area predicted arrival time or the application context holding timer request value ti received from the EES 210 in step S206, the target EAS 230 may include a rejection indicator indicating rejection of the request in the corresponding response message. If the determined final application context holding time value tₕ is larger than or equal to the value ti received from the target EES 220 in step S206, the target EAS 230 may include an acceptance indicator indicating acceptance of the request in the corresponding acknowledgment message.

In still another example, in steps S206 to S210, the target EAS 230 may receive the message including the target EES (or target EAS) service area predicted arrival time or the application context holding timer request value ti from the target EES 220. Upon receiving the message, the target EAS 230 may calculate an application context storage holdable time value t₂ determined according to the available storage space, include the same in the acknowledgment message, and transmit the acknowledgment message to the target EES 220. Upon receiving the application context storage holdable time value t₂ from the target EAS 230, the target EES 220 may compare the target EES (or target EAS) service area predicted arrival time or the application context holding timer request value ti with the application context storage holdable time value t₂ to determine the final application context holding time value tₕ. The same method as the method described in step S208 may be applied to the method of calculating the final application context holding time value tₕ. The determined final application context holding time value may be transmitted to the target EAS 230 and the EEC 210.

In step S212, the target EAS 230 may receive the application context for the service of the corresponding UE (the corresponding EEC) 210 from the source EAS 240 identified from the target EES 220 (pull operation). In this step, the target EAS 230 may inform the source EAS 240 that the pull operation is prediction-based application context relocation (or service continuity planning).

In step S214, the target EES 220 may transmit, to the EEC 210, a message including a result included in the response message received from the target EAS 230 in step S210 or a result calculated and determined by itself. The corresponding message may be a response message to the ACR request received from the EEC in step S202. The response message may include the final application context holding time value tₕ. For example, when the final application context holding time value tₕ provided from the target EES 220 is less than the application context holding timer request value ti presented in step S202, the EEC 210 may determine whether to continue or stop the application context relocation procedure for the target EES 220.

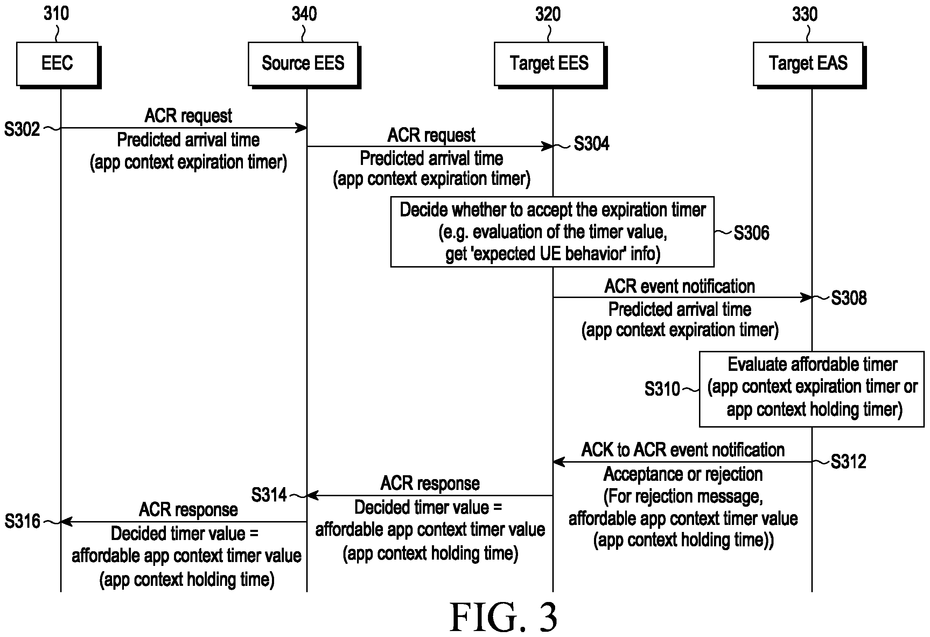

FIG. 3 is a view illustrating a procedure for managing an application context based on an expected arrival time of a UE in an edge computing network, according to another embodiment of the disclosure.

The source EES 340 may select the target EES 320 using edge computing configuration information stored in the source EES 340 before performing step S304 of FIG. 3 or edge computing configuration information obtained by requesting an edge configuration server (ECS). Based on this, the following operations may be performed.

In step S302, the EEC 310 may transmit the ACR request message to the source EES 340. The ACR request message may include the predicted movement path of the UE calculated by the EEC 310 or obtained from another device in the UE, and the predicted arrival time to an EES service area other than the source EES or the source EES (or source EAS) service area exit time. The corresponding ACR request message may include at least one of ACR type information (an indicator indicating that the corresponding ACR request is prediction-based, e.g., the service continuity planning indication), the target EES (or target EAS) service area predicted arrival time, the application context holding timer request value, the UE identifier, the application identifier, and source EAS information (the identifier and address of the edge application server currently serving the UE).

In step S304, the source EES 340 may receive, from the EEC 310, the UE predicted movement path and the predicted arrival time to the EES service area other than the source EES currently connected or the source EES (or source EAS) service exit time and, based thereon, select the target EES 320 in the predicted movement path of the UE. The source EES 340 may transmit the application context relocation (ACR) request message to the target EES 320 on the selected predicted movement path. The corresponding ACR request message may include at least one of ACR type information (an indicator indicating that the corresponding ACR request is prediction-based, e.g., the service continuity planning indication), the target EES (or target EAS) service area predicted arrival time, the application context holding timer request value, the UE identifier, the application identifier, source EES information (the address and identifier of the EES in which the UE is currently connected or registered) and source EAS information (the identifier and address of the edge application server currently serving the UE).

In step S306, when the ACR request message received from the source EES 340 includes at least one of the indicator indicating that the ACR request is prediction-based, UE expected movement path information, or target EES service area predicted arrival time information, the EES 310 may review and recalculate whether to accept the corresponding prediction-based ACR request, the expected movement path of the UE provided by the source EES 340, and the target EES (or target EAS) service area predicted arrival time information. Such review and recalculation may be performed through various methods, and FIG. 3 relates to a method of performing a review and determining the prediction time by the target EES 320 in association with the target EAS 330.

In step S308, the target EES 320 may provide the target EAS 330 with information received from the EEC 310 in step S302. The corresponding information may include at least one of ACR type information (an indicator indicating that the corresponding ACR request is prediction-based, e.g., the service continuity planning indication), the target EES (or target EAS) service area predicted arrival time, the application context holding timer request value, the UE identifier, the application identifier, and source EAS information (the identifier and address of the edge application server currently serving the UE). For example, information provided from the target EES 320 to the target EAS 330 may be included in an ACR event notification message and be transmitted.

In step S310, the target EAS 330 may determine whether it is possible to store and maintain the application context received from the source EAS 340 by the target EES (or target EAS) service area predicted arrival time received from the target EES 320 via the source EES 340 in the EEC 310 or the period specified in the application context holding timer request value ti. For example, the target EAS 330 may calculate the application context storage holdable time value t₂ determined according to the available storage space, compare the same with the application context holding time value ti received from the target EES 320, and determine the final application context holding time value (tₕ: app context expiration timer or app context holding timer) (e.g., determine the final application context holding time value by determining according to tₕ = min(ti, t₂) for determining as the smaller value of the time values, or adding an offset (tₒ) time determined according to the edge computing service policy to the smaller of ti and t₂, like tₕ = min(ti, t₂) + tₒ). The target EAS 330 may obtain available storage space information from the EAS management system to determine the application context storage holdable time value t₂. Alternatively, when the EAS may directly obtain information about the available storage space, the corresponding value may be calculated. The target EAS 330 may store the calculated final application context holding time value tₕ and, immediately after receiving the application context from the source EAS 340, drive the timer in which the corresponding time value is set to store the application context only during the set timer value period, and may wait for the corresponding UE to access.

In step S312, the target EAS 330 transmits an acknowledgement message to the target EES 320 in response to the message received from the target EES 320 through step S308. The final application context holding time value determined in step S310 may be included in the corresponding acknowledgement message. When the final application context holding time value tₕ determined in step S310 is less than the target EES (or target EAS) service area predicted arrival time or the application context holding timer request value ti received from the EES 310 in step S308, the target EAS 330 may include a rejection indicator indicating rejection of the request in the corresponding response message. If the determined final application context holding time value tₕ is larger than or equal to the value ti received from the target EES 320 in step S308, the target EAS 330 may include an acceptance indicator indicating acceptance of the request in the corresponding acknowledgment message.

In still another example, in steps S308 to S312, the target EAS 330 may receive the message including the target EES (or target EAS) service area predicted arrival time or the application context holding timer request value ti from the target EES 320. Upon receiving the message, the target EAS 330 may calculate an application context storage holdable time value t₂ determined according to the available storage space, include the same in the acknowledgment message, and transmit the acknowledgment message to the target EES 320. Upon receiving the application context storage holdable time value t₂ from the target EAS 330, the target EES 320 may compare the target EES (or target EAS) service area predicted arrival time or the application context holding timer request value ti with the application context storage holdable time value t₂ to determine the final application context holding time value tₕ. The same method as the method described in step S310 may be applied to the method of calculating the final application context holding time value tₕ.

In step S314, the target EES 330 may transmit, to the source EES 340, a message including a result included in the acknowledgment message received from the target EAS 330 in step S210 or a result calculated and determined by itself. The corresponding message may be a response message to the ACR request received from the source EES 340 in step S304. The response message may include the final application context holding time value tₕ. For example, when the final application context holding time value tₕ provided from the target EES 320 is less than the application context holding timer request value ti presented in step S304, the source EES 340 may determine whether to continue or stop the application context relocation procedure for the target EES 320.

In step S316, the source EES 340 may include the information obtained from the target EES 320 and the target EAS 330 in step S314 in the response message to the request message of step S302 and transmit the same to the EEC 310. For example, when the final application context holding time value tₕ provided from the target EES 320 is less than the application context holding timer request value ti presented in step S304, the EEC 310 may determine whether to continue or stop the application context relocation procedure for the target EES 320.

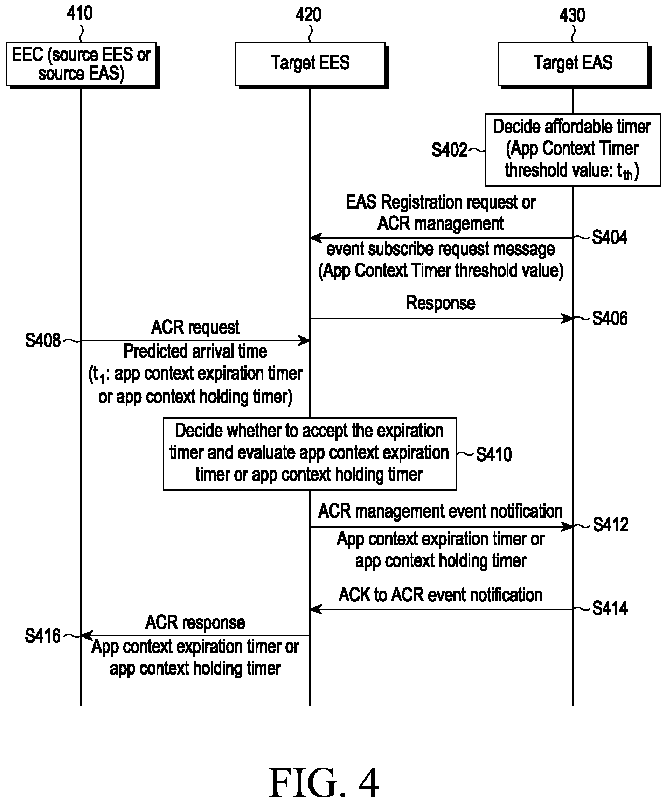

FIG. 4 is a view illustrating a procedure for managing an application context based on an expected threshold time of an application server in an edge computing network, according to an embodiment of the disclosure.

When the ACR request message received from the EEC 410 includes at least one of the indicator indicating that the corresponding ACR request is prediction-based, expected movement path information about the UE, or target EES (or target EAS) service area predicted arrival time information, the target EES 420 may review and recalculate whether to accept the corresponding ACR request, the expected movement path of the UE provided by the EEC 410, and the target EES (or target EAS) service area predicted arrival time information. Such review and recalculation may be performed through various methods, and FIG. 4 relates to a method of performing a corresponding operation based on the information previously received from the target EAS by the target EES.

In step S402, when the EAS allows the prediction-based application context relocation, the EAS may determine an application context holding limit value indicating how long the application context received from the source EAS is stored. For example, the EAS management system may be determined according to the set value while instantiating the EAS, or may be determined according to the policy of the edge computing service provider that provides the hosting environment of the edge data network in which the EAS is instantiated. The application context holding limit value determined through these various methods may be used to process the ACR request message transmitted to the target EES 420 and transmitted from the EEC 410 or the source EAS.

In step S404, the target EAS 430 may determine and transmit the application context holding limit value (tₜₕ: application context timer threshold value) to the target EES 420. The application context holding limit value tₜₕ may be a timer value indicating how long the target EAS 430 will store the application context received from the source EAS in the target EAS 430 when the prediction-based application context relocation occurs. The information may be included in an EAS registration request message or an ACR management event subscription request message and be transmitted. The target EAS 430 may provide the application context holding limit value only when the prediction-based application context relocation is allowed. Further, the target EAS 430 may preset a validity period (timer validity) for the application context holding limit value and provide the preset timer validity to the target EES 420. The update of the validity period may be additionally performed through an EAS registration update procedure or an ACR management event subscription update procedure.

In step S406, the target EES 420 transmits, to the target EAS 430, a response message indicating that the application context holding limit value tₜₕ received from the target EAS 430 has been successfully set. The corresponding message has the form of a response message according to the message transmitted by the target EAS 430 in step S404. For example, when the response message is a response message to the EAS registration request, information indicating the successful setting of the application context holding limit value may be transmitted together with the EAS registration identifier. If the response message is a response message to the ACR management event subscription request message, information indicating the successful setting of the application context holding limit value together with the subscription correlation ID may be transmitted to the target EAS 430. The target EES 420 may store the received application context holding limit value for the validity period.

In step S408, the target EES 420 may receive a prediction-based ACR request message from the EEC 410 (or source EES or source EAS). The ACR request message may include at least one of ACR type information (an indicator indicating that the corresponding ACR request is prediction-based, e.g., the service continuity planning indication), the target EES (or target EAS) service area predicted arrival time, the application context holding timer request value, the UE identifier, the application identifier, source EES information (the address and identifier of the EES in which the UE is currently connected or registered) and source EAS information (the identifier and address of the edge application server currently serving the UE).

In step S410, the target EES 420 may compare the received target EES (or target EAS) service area predicted arrival time or application context holding timer request value ti with the application context holding limit value tₜₕ set through the previous steps to determine a final application context holding time value tₕ (app context expiration timer or app context holding timer). (For example, the final application context holding time value may be determined according to tₕ = min(ti, tₜₕ) for determining the smaller of the time values or as tₕ = min(ti, tₜₕ) + tₒ, by adding the offset to determined according to the edge computing service policy to the smaller of t₁ and t₂.) Based on the determined final application context holding time value, it may be determined whether to accept the received prediction-based ACR request message.

In step S412, the target EES 420 may provide the final application context holding time value tₕ determined in step S410 to the target EAS 430. When the final application context holding time value tₕ is provided, it may be provided together with information about the source EAS. In some cases, only when the determined final application context holding time value is less than the application context holding limit value tₜₕ, the newly set final application context holding time value tₕ may be transmitted to the target EAS 430. In this case, whether to use tₕ, which is a timer value smaller than the application context holding limit value tₜₕ, may be determined according to internal settings of the target EAS 430 or the like. The target EAS 430 may store the timer value determined to be used as the application context holding time value and, immediately after receiving the application context from the source EAS, drive the timer in which the corresponding time value is set to store the application context only during the set timer value period, and may wait for the corresponding UE to access.

In step S414, the target EAS 430 may transmit a response message to step S412. The corresponding message may include whether to accept the ACR request.

In step S416, the target EES 420 may include the application context holding time value tₕ determined in the previous steps in the response message to the ACR request of the device that sent the request message in step S408 and transmit the same. The operation of step S416 may be performed before the operation of step S412 or step S414.

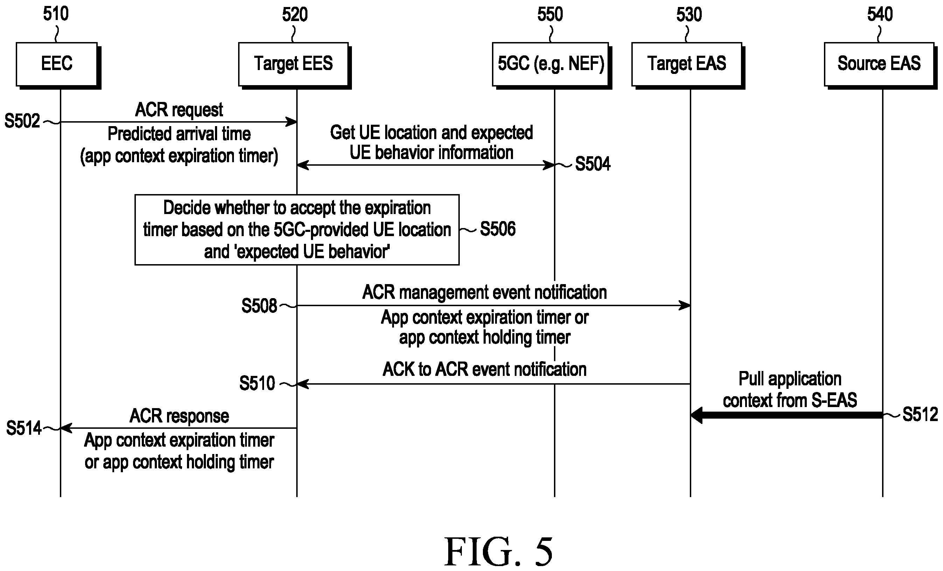

FIG. 5 is a view illustrating a procedure for managing an application context based on prediction information of a communication network in an edge computing network, according to an embodiment of the disclosure.

In step S502, the EEC 510 may directly calculate or obtain the predicted movement path of the UE and the target EES service area predicted arrival time. The EEC 510 may select the target EES 520 in the predicted movement path of the UE and transmit the application context relocation (ACR) request message. The ACR request message may include at least one of ACR type information (an indicator indicating that the ACR request is prediction-based, e.g., a service continuity planning indication), target EES (or target EAS) service area predicted arrival time, an application context holding timer request value, the expected movement path (e.g., which may have the form of list of UE locations or UE trajectory information) of the UE, a UE identifier, an application identifier, source EES information (the address and identifier of the EES where the UE is currently connected or registered, the edge computing service provider identifier or source EES provider identifier as the source EES provider information), and the source EAS information (the identifier and the address of the edge application server currently serving the UE).

In step S504, when the ACR request message received from the EEC 510 includes at least one of the indicator indicating that the ACR request is prediction-based, UE expected movement path information, or target EES (or target EAS) service area predicted arrival time information, the target EES 520 may review and recalculate whether to accept the ACR request which is prediction-based, the expected movement path of the UE provided by the EEC 510, and the target EES (or target EAS) service area predicted arrival time information. Such review and recalculation may be performed through various methods, and FIG. 5 relates to a method in which the target EES 520 performs a corresponding operation in conjunction with various network functions 550 of a network such as a 5G core network. Specifically, the target EES 520 may invoke the event exposure (e.g., Nnef_EventExposure service provided by the network exposure function (NEF) of the network (e.g., a 5G core network) 550 to obtain the UE's current location information, invoke the analytics exposure (e.g., NnefAnalyticsExposure) service for utilizing analytics information providable from the network data analytic function (NWDAF) to obtain expected UE behavior information (e.g., expected UE moving trajectory) or expected time and day of week in trajectory.

In step S506, the target EES 520 may determine the reliability of the target EES (or target EAS) service area predicted arrival time, the application context holding timer request value, and the expected movement path of the UE (e.g., which may have the form of list of UE locations or UE trajectory information) transmitted by the EEC 510 in step S502, considering the UE's current location information and the expected UE moving trajectory obtained from the network 550 . For example, if it is determined that the UE is located at a distance that may not be reached within the predicted arrival time provided by the EEC 510 (or the UE), or if it is determined that there is a significant difference between the predicted movement path of the UE provided by the EEC 510 and the expected UE moving trajectory provided by the network in the previous step (for example, there may be a difference of a predetermined threshold or more). The target EES 520 may reject the prediction-based ACR request of the EEC 510. Alternatively, the target EES 520 may calculate the expected arrival time of the UE to the target EES service area considering the current location of the UE and the expected UE moving trajectory provided by the network, and determine the application context holding time value (app context expiration timer or app context holding timer) based on the same.

In step S508, the target EES 520 may transmit the application context holding time value (app context expiration timer or app context holding timer) determined in the previous step to the target EAS 530. The corresponding value may be included in the ACR management event notification message and be transmitted.

In step S510, the target EAS 530 may transmit a response message to the message in step S508. The corresponding response message may include whether to accept the ACR request. Further, the target EAS 520 may store the application context holding time value determined in the above-described step and, immediately after receiving the application context from the source EAS 540, drive the timer in which the corresponding time value is set to store the application context only during the set timer value period, and may wait for the corresponding UE to access.

In step S512, the target EAS 530 may receive the application context from the source EAS 540 (pull operation). The application context is stored and maintained for the determined application context holding time value. If the UE does not access until the application context holding time expires, the application context stored and maintained may be deleted and related resources may be recovered.

In step S514, the target EES 520 includes the determined application context holding time value in the response message to the ACR request of the EEC 510 in step S502 and transmits the same. The operation of step S514 may be performed before the operations of step S508 to step S512.

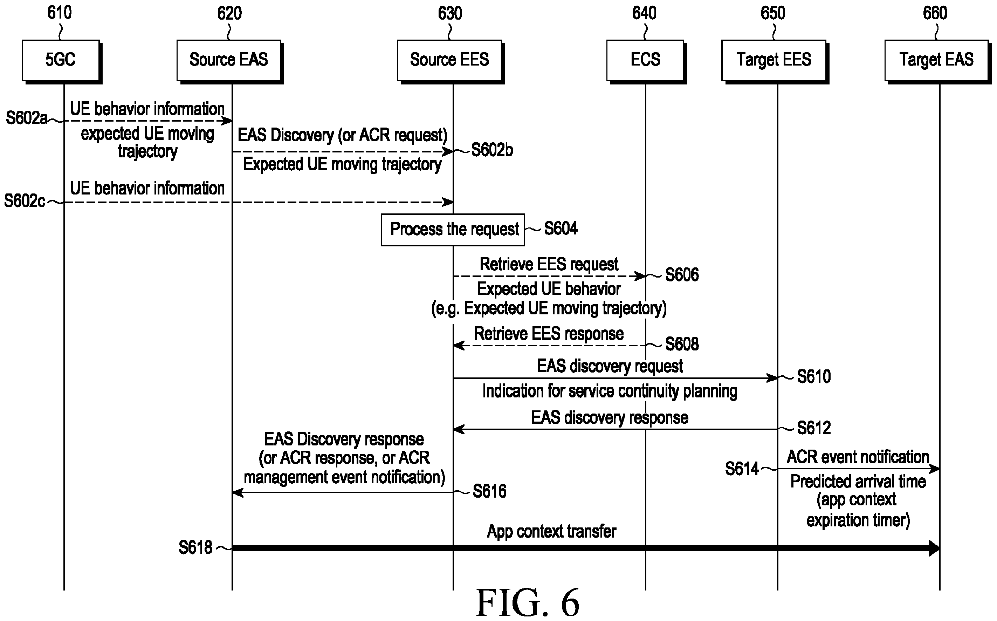

FIG. 6 illustrates a procedure for managing an application context based on UE behavior information provided by a communication network in an edge computing network, according to an embodiment of the disclosure.

When the source EAS 620 or the source EES 630 allows prediction-based application continuity planning, the source EAS 620 or the source EES 630 may use expected UE behavior information (e.g., expected UE moving trajectory information or expected time and day of week in trajectory) that may be provided by the communication network (e.g., the 5G core network 610 or the 6G network). For example, after obtaining the expected UE behavior information (information about the expected path of the UE and the expected path arrival time, etc.) provided by the NWDAF or the access management function (AMF) through the NEF, the target EES 650 and the target EAS 660 may be selected based on the information about the expected path of the UE and the expected path arrival time, and an application context relocation procedure may be performed.

The source EAS 620 may obtain expected UE behavior information (e.g., expected UE moving trajectory information; list of TAI lists, cell ID lists, latitude and longitude location coordinates, separately defined location identifier, or the like) from the network function (NEF, NWDAF, AMF, or the like) of the communication network (e.g., 5G core network) 610 (step s602a). In order to perform the prediction-based application context relocation procedure based on the received information, the source EAS 620 may transmit the expected UE behavior information, the identifier of the UE, the identifier of the application being used, and the like to the source EES 630 (step s602b). To transmit the information in step S602b, the source EAS 620 may use an EAS discovery request message or an application context relocation request message. As another example, when the source EES 630 monitors the location of the UE instead of the source EAS 620, the source EES 630 may directly obtain expected UE behavior information from a network function (NEF, NWDAF, AMF, etc.) of the network 610 (step S602c).

In step S604, the source EES 630 may select the target EES 650 from among the EESs included in the predicted movement path of the UE by comparing the predicted movement path of the UE with the service area of another EES stored in the source EES 630, based on the expected UE behavior information received from the source EAS 620 or the network 610.

In step S606, when the information about the at least one EES on the predicted movement path of the UE is not stored in step S604, the source EES 630 may transmit a retrieve EES request message including the predicted movement path of the UE obtained in steps S602a to S602c to the ECS 640. The information included in the retrieve EES request message may include the expected UE moving trajectory (e.g., the UE location information list such as the TAI list, the cell ID list, latitude and longitude location coordinates, and the separately defined location identifier), the source EAS identifier, the source EES provider identifier (edge computing service provider identifier), the application identifier, the target UE identifier, and the like.

In step S608, the ECS 640 may transmit EES information (EES identifier and address information) on the expected UE moving trajectory received from the source EES 630 and edge data network configuration information (DNN or S-NSSAI information, etc.) required to access the corresponding EES to the source EES 630. Steps S606 and S608 may or may not be performed according to previous settings.

In step S610, the source EES 630 may set the target EES 650 based on the information about the EES received from the ECS 640 and transmit an EAS discovery request message to the target EES 650. The corresponding message may include at least one of the source EAS identifier, the source EES provider identifier (edge computing service provider identifier), the application identifier, the target UE identifier, the indication for service continuity planning specifying that the corresponding request message is prediction-based application context relocation, and the application context holding time value.

In step 612, if the indication for service continuity planning specifying the prediction-based application context relocation is included in the EAS discovery request message received from the source EES 630, the target EES 650 identifies whether the prediction-based application context relocation (service continuity planning operation) for the corresponding UE, the source EAS, and the source EES provider is allowed. If it is identified that the target EAS 660 is allowed, information about the target EAS 660 may be provided to the source EES 630.

In an embodiment, after step S612, the source EES 630 may transmit, to the target EES 650, an application context relocation request message including the indication for service continuity planning specifying the prediction-based application context relocation, the target UE identifier, the source EAS identifier and address information, and the source EES provider identifier (edge computing service provider identifier).

In step S614, the target EES 650 may transmit a message (e.g., an ACR event notification) to the target EAS 660 which has provided information to the source EES 630 in the previous step. The corresponding message may include the indicator indicating that the prediction-based application relocation is to be performed, the UE identifier related to information about which UE the prediction-based application relocation procedure is to be performed, the source EAS identifier and address information, and the application context holding time value.

In step S616, the source EES 630 may transmit the target EAS identifier and address information, the application context holding time value, and the like to the source EAS 620. For example, the transmitted message may be a response message to the EAS discovery request in the previous steps S602a to S602c, a response message to the application context relocation request, or an ACR management event notification.

After the above-described operation is performed, the source EAS 630 may transmit the application context to the target EAS 660. The target EAS 660 may store the application context received from the source EAS 630 and may maintain the same during the application context holding time. If the UE does not access until the application context holding time expires, the related application context stored may be deleted and related resources may be recovered.

In the embodiment of the disclosure, how the application context holding time is used in the target EAS has been described. However, the corresponding application context holding time may be provided to the source EAS, and may be used to determine the time for starting the application context transmission in the source EAS based thereon.

In the disclosure, proposed are various methods in which the EES determines the period for storing the application context received from the target EAS in the prediction-based application context relocation operation. In the various methods proposed, methods for comprehensively using in a single procedure may also be included in the scope of the disclosure. For example, the target EES and the target EAS may determine an application context holding time value considering all of (1) the predicted movement path of the UE provided by the EEC or the predicted arrival time of the target EES or target EAS service area or the application context holding timer request value, (2) the storage space information available to the target EAS (information obtainable from inside of the target EAS or from the EAS management system), (3) the application context holding time considering the application context holding limit value set by the target EAS, and (4) the expected UE behavior information obtained through the network function of the 5G core network.

Each of the UE, the core network, the data network, the EEC, the AC, the EAS, the EES, and the ECS described in the disclosure may be formed as a separate device or a combined device, and each device may include a transceiver or a processor for enabling individual control.

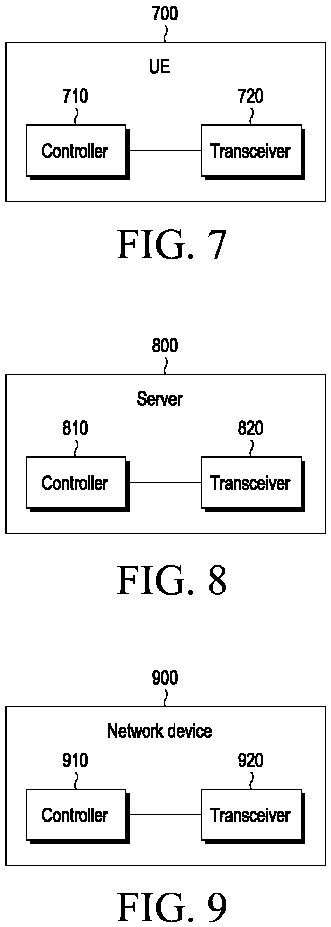

FIG. 7 is a view illustrating a structure of a UE according to an embodiment of the disclosure. Referring to FIG. 7, according to an embodiment, a UE may include at least one controller (or a processor) 710 and a transceiver 720 including a receiver and a transmitter. The UE may include a memory (not shown). The transceiver 720 and the memory may be connected to the at least one controller 710 to be operated under the control of the at least one controller 710.

At least one controller 710 may control a series of processes so that the operations of the UE described in connection with the embodiments of FIGS. 1 to 6 may be performed. The transceiver 720 may transmit and receive signals to/from the server 800 and another network device 900. The signals may include control information and data. The UE may include the EEC of FIGS. 1 to 6 and may be configured as a separate device. Further, at least one controller may control the EEC to operate.

FIG. 8 illustrates a structure of a server according to an embodiment of the disclosure. The server may correspond to all of the source EAS, source EES, target EAS, target EES, and ECS, and each device may be configured separately or combined to form one device. Referring to FIG. 8, a server of the disclosure may include at least one controller (e.g., a processor) 810 and a transceiver 820 including a receiver and a transmitter. The network device may include a memory (not shown). The transceiver 820 and the memory may be connected to the at least one controller 810 to be operated under the control of the at least one controller 810.

At least one controller 810 may control a series of processes so that the operations of the server described in connection with the embodiments of FIGS. 1 to 6 may be performed. The transceiver 820 may transmit and receive signals to/from the UE 700 and another network device 900. The signals may include control messages and data information.

FIG. 9 is a view illustrating a structure of a network device (or communication network or network) according to an embodiment of the disclosure. Referring to FIG. 9, according to an embodiment, a network device may include at least one controller (e.g., a processor) 910 and a transceiver 920 including a receiver and a transmitter. The network device may include a memory (not shown). The transceiver 920 and the memory may be connected to the at least one controller 910 to be operated under the control of the at least one controller 910.

At least one controller 910 may control a series of processes so that the operations of the network device (or communication network, 5G core network, or network) described in connection with the embodiments of FIGS. 1 to 6 may be performed. The transceiver 920 may transmit and receive signals to/from the UE 700 and the server 800. The signals may include control messages and data information.

The network device 900 may include all devices corresponding to network functions, such as AUSF, NEF, NF, UDM/AMF, UPF, SMF, NRF, and PCF according to the disclosure, and the network functions may be independently configured.

The parameters or information included in the disclosure may be interpreted as shown in Table 1 below. However, the parameters and information do not belong only to the description in Table 1 below.

**[Table 1]**

| Expected UE Behavior parameter | Description |
|---|---|
| Expected UE Moving Trajectory | Identifies the UE's expected geographical movement |
| | Example: A planned path of movement |
| Stationary Indication | Identifies whether the UE is stationary or mobile |
| | |
| Communication Duration Time | Indicates for how long the UE will normally stay in CM-Connected for data transmission. |
| | Example: 5 minutes. |
| Periodic Time | Interval Time of periodic communication |
| | Example: every hour. |
| Scheduled Communication Time | Time and day of the week when the UE is available for communication. |
| | Example: Time: 13:00-20:00, Day: Monday. |
| Battery Indication | |
| Identifies power consumption criticality for the UE: if the UE is battery powered with not rechargeable/not replaceable battery, battery powered with rechargeable/replaceable battery, or not battery powered. | |
| Traffic Profile | Identifies the type of data transmission: single packet transmission (UL or DL), dual packet transmission (UL with subsequent DL or DL with subsequent UL), multiple packets transmission |
| Scheduled Communication Type | Indicates that the Scheduled Communication Type is Downlink only or Uplink only or Bi-directional [To be used together with Scheduled Communication Time] |
| | Example: <Scheduled Communication Time>, DL only. |
| Expected Time and Day of Week in Trajectory | Identifies the time and day of week when the UE is expected to be at each location included in the Expected UE Moving Trajectory. |

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

The embodiments herein are provided merely for better understanding of the present invention, and the present invention should not be limited thereto or thereby. In other words, it is apparent to one of ordinary skill in the art that various changes may be made thereto without departing from the scope of the disclosure. Further, the embodiments may be practiced in combination.

## Claims

1. An edge enabler server (EES) in a wireless communication system, comprising:
a transceiver; and
at least one processor connected to the transceiver, wherein the at least one processor is configured to:
receive, from an edge enabler client (EEC), a request message including information related to a predicted movement path of a user equipment (UE) in which the EEC is included; and
determine an application context storage time based on the information related to the predicted movement path of the UE.

2. The EES of claim 1, wherein the request message is an application context relocation (ACR) request message, and
wherein the information related to the predicted movement path of the UE includes at least one of a service continuity planning indication, a target EES service area predicted arrival time, an application context holding timer request value (application context expiration timer), an identifier of the UE, an application identifier, information about an EES currently serving the UE, and an edge application server (EAS) currently serving the UE.

3. The EES of claim 1, wherein the at least one processor is further configured to:
determine a first edge application server (EAS) based on the movement path of the UE;
receive, from the first EAS, information related to a predetermined application context storable time; and
determine the application context storage time based on the information related to the application context storable time and the information related to the predicted movement path of the UE.

4. The EES of claim 3, wherein the application context storage time is determined to be a smaller value of the application context storable time and the information related to the predicted movement path of the UE.

5. The EES of claim 3, wherein the at least one processor is further configured to:
transmit the determined application context storage time to the EEC.

6. A method performed by an edge enabler server (EES) in a wireless communication system, the method comprising:
receiving, from an edge enabler client (EEC), a request message including information related to a predicted movement path of a user equipment (UE) in which the EEC is included; and
determining an application context storage time based on the information related to the predicted movement path of the UE.

7. The method of claim 6, wherein the request message is an application context relocation (ACR) request message, and
wherein the information related to the predicted movement path of the UE includes at least one of a service continuity planning indication, a target EES service area predicted arrival time, an application context holding timer request value (application context expiration timer), an identifier of the UE, an application identifier, information about an EES currently serving the UE, and an edge application server (EAS) currently serving the UE.

8. The method of claim 6, further comprising:
determining a first edge application server (EAS) based on the movement path of the UE;
receiving, from the first EAS, information related to a predetermined application context storable time; and
determining the application context storage time based on the information related to the application context storable time and the information related to the predicted movement path of the UE.

9. The method of claim 8, wherein the application context storage time is determined to be a smaller value of the application context storable time and the information related to the predicted movement path of the UE.

10. The method of claim 8, further comprising:
transmitting the determined application context storage time to the EEC.
